# EUROPÄISCHE PATENTSCHRIFT

(11) **EP 1 352 225 B1**
(45) Veröffentlichungstag und Bekanntmachung des Hinweises auf die Patenterteilung: **17.04.2013**
(21) Anmeldenummer: 02700143.7
(22) Anmeldetag: 08.01.2002
(51) Int. Cl.: G01M 17/007

(54) **VERFAHREN ZUR GLEICHLAUFREGELUNG BEI EINEM KRAFTFAHRZEUGPRÜFSTAND**
METHOD FOR SYNCHRONISATION CONTROL OF A VEHICLE TESTING STAND
PROCEDE POUR LA REGULATION DE SYNCHRONISME DANS UN BANC D'ESSAI DE VEHICULES AUTOMOBILES

(30) Priorität: 15.01.2001 DE 10101582
(43) Veröffentlichungstag der Anmeldung: 15.10.2003
(73) Patentinhaber: Siemens Aktiengesellschaft, 80333 München (DE)
(72) Erfinder: WIESER, Norbert, 91322 Gräfenberg (DE)
(86) Internationale Anmeldenummer: PCT/DE2002/000026
(87) Internationale Veröffentlichungsnummer: WO 2002/055980

(56) Entgegenhaltungen:
- EP-A- 0 567 781
- DE-A- 2 337 011
- DE-C- 4 238 968
- US-A- 2 682 630
- US-A- 4 161 116
- US-A- 4 538 097
- US-A- 4 635 472
- US-A- 5 402 676

## Beschreibung

Die Erfindung betrifft ein Verfahren zur Gleichlaufregelung bei einem Kraftfahrzeugprüfstand.

Zur Überprüfung eines Fahrzeugs nach dessen Endmontage werden üblicherweise Tests durchgeführt. Diese erfolgen oft im Rahmen einer kostenintensiven Straßenfahrt.

Um derartige kostenintensive Straßenfahrten zu verkürzen oder völlig zu ersetzen, ist es bereits bekannt, einen Prüfstand zur Verfügung zu stellen, mittels welchem die Unebenheiten einer Straße simuliert werden können. Bekannte Prüfstand weisen Laufrollen mit nichtverstellbarem Profil auf. Sie sind deshalb unflexibel und nur zu einer eingeschränkten Überprüfung eines Fahrzeugs geeignet.

Weiterhin ist in der DE 299 18 490.0 bereits ein Fahrzeugprüfstand beschrieben, welcher profilierte Rollen aufweist. Jede dieser Laufrollen ist an ihrem Außenumfang mit einer Vielzahl von profilgebenden Klötzen versehen, welche jeweils in Radialrichtung der Laufrolle zum Zwecke einer Profiländerung der Laufrolle verstellbar sind. Die Laufrollen weisen jeweils eine Breite auf, die im Bereich des Ein- bis Zweifachen der Breite eines Fahrzeugreifens liegt. Weiterhin ist, der Fahrzeugprüfstand mit einer Rechnereinheit versehen, die zur Realisierung eines Prüfprogrammes dient. Beispielsweise kann die Rechnereinheit so programmiert sein, dass im Rahmen des Prüfprogrammes automatisch unterschiedliche Straßenbeläge durch eine Verstellung der Klötze der Laufrollen simuliert werden.

Aus der US 4,635,472 ist eine Vorrichtung zum Testen eines Fahrzeuges bekannt. Dabei ist für jedes Rad eines zu prüfenden Fahrzeugs eine eigene Laufrolle vorgesehen. Jede Laufrolle wird über einen separaten Synchronmotor angetrieben. Die Motoren sind über einen gemeinsamen Frequenzumrichter an eine elektrische Spannungsquelle angeschlossen. Damit die Synchronmotoren die gleiche Drehzahl aufweisen, werden über eine an jedem Motor angebrachte Drehmomentmesseinrichtung Drehmomentenschwankungen erfasst. Die Messwerte der Drehmomentmesseinrichtungen werden einer zentralen Auswerteeinheit zugeführt, die hieraus ein Stellsignal für den zentralen Frequenzumrichter der vier Synchronmotoren ableitet.

Aus der EP 0 567 781 A2 ist ein Verfahren und eine Vorrichtung zum Regeln von Elektromotoren bekannt. Es sollen damit zwei oder mehr Motoren mit definierten Drehzahlunterschieden betrieben werden können. Hierzu werden mit zunehmendem Drehwinkel der Motoren von Sensoren Impulsfolgen erzeugt. Abhängig von der Differenz der Impulsfolgen von verschiedenen Motoren werden diese dann zeitweilig teilweise oder vollständig vom Netz abgeschaltet.

Ferner ist es bereits bekannt, einen Gleichlauf der Walzen eines Kraftfahrzeugprüfstandes über eine mechanische Kupplung der Walzen sicherzustellen.

Der Erfindung liegt die Aufgabe zugrunde, einen neuen Weg zur Gleichlaufregelung bei einem Kraftfahrzeugprüfstand anzugeben, der die Flexibilität des Fahrzeugprüfstandes erhöht.

Diese Aufgabe wird durch ein Verfahren mit den im Anspruch 1 angegebenen Merkmalen gelöst. Vorteilhafte Ausgestaltungen und Weiterbildungen der Erfindung ergeben sich aus den abhängigen Ansprüchen.

Die Vorteile der Erfindung bestehen insbesondere darin, dass bei der Prüfung auf die Antriebs-Räder des Kraftfahrzeugs gezielt ein Drehmoment vorgegeben werden kann, um Berg- oder Talfahrten zu simulieren. Desweiteren ist es möglich, die mit einem Profil versehenen Walzen in ihrer Lage relativ zueinander zu verdrehen, so dass sich bei Kraftfahrzeug-Rütteltests eine andere Abfolge des simulierten Fahrbahnbelages ergibt. Durch geeignete Freigaben in der Regelung können auf einfache und schnelle Weise Prüfroutinen bei front-, heck- und allradgetriebenen Fahrzeugen realisiert werden.

Weitere vorteilhafte Eigenschaften der Erfindung ergeben sich aus deren beispielhaften Erläuterung anhand der Figuren. Es zeigt:
- FIG 1: ein Blockdiagramm zur Erläuterung des Zusammenwirkens der einzelnen Bestandteile eines Kraftfahrzeugprüfstandes gemäß der Erfindung,
- FIG 2: ein detaillierteres Strukturbild der Regelung in einer möglichen Betriebsart des Kraftfahrzeugprüfstandes und
- FIG 3: ein detaillierteres Strukturbild der Regelung in einer weiteren möglichen Betriebsart des Kraftfahrzeugprüfstandes.

Ein Kraftfahrzeugprüfstand gemäß der Erfindung ist in zwei Betriebsarten betreibbar: Betriebsart 1: "Walze treibt Auto" und Betriebsart 2: "Auto treibt Walze".

In der Betriebsart 1 "Walze treibt Auto" wird mittels einer übergeordneten Steuerung, beispielsweise über ein Bedienpanel, ein Drehzahlsollwert vorgegeben. Unter Verwendung dieses Drehzahlsollwertes erfolgt eine Ansteuerung von Asynchronmotoren, die ihrerseits Walzen antreiben, auf denen die Räder des Kraftfahrzeugs positioniert sind. Die Prüfstandsregelung sorgt nun dafür, dass alle vier Walzen im Winkelgleichlauf, ggf. unter Berücksichtigung einer vorgebbaren Relativstellung der Walzen zueinander betrieben werden. Das Kraftfahrzeug befindet sich bei dieser Betriebsart im ungebremsten, ausgekuppelten Zustand.

In der Betriebsart 2 "Auto treibt Walze" wird die Solldrehzahl von einem Fahrer des Fahrzeugs indirekt durch eine entsprechende Betätigung des Gaspedals des Fahrzeugs vorgegeben. Die Betätigung des Gaspedals sorgt im eingekuppelten Zustand des Fahrzeugs für eine Drehbewegung der beiden Antriebsräder und eine entsprechende Kraftübertragung auf die Walzen. Auch in diesem Fall realisiert die Prüfstandsregelung einen Winkelgleichlauf aller Walzen, ggf. unter Berücksichtigung eines vorgebbaren Winkelversatzes.

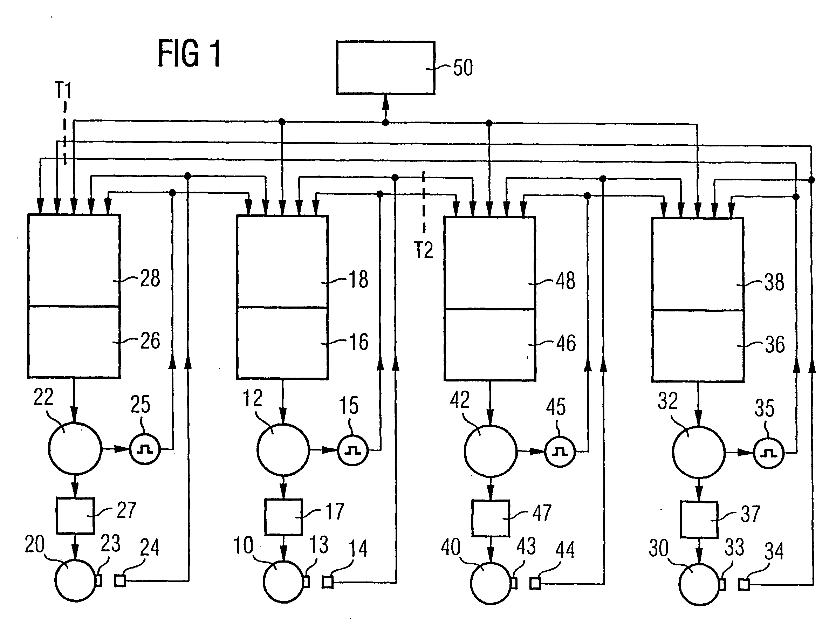

Die FIG 1 zeigt ein Blockdiagramm zur Erläuterung des Zusammenwirkens der einzelnen Bestandteile eines Kraftfahrzeugprüfstandes gemäß der Erfindung.

Der gezeigte Kraftfahrzeugprüfstand weist vier Walzen 10, 20, 30, 40 auf. Auf der Walze 20 ist während des Prüfbetriebes das linke Vorderrad des Kraftfahrzeugs positioniert. Die Walze 20 ist mit einem Asynchronmotor 22 unter Zwischenschaltung einer Getriebeübersetzung 27 verbunden. Dieser Asynchronmotor wird von einem Wechselrichter 26 mit integrierter Drehzahl-/Winkelregelung 28 angesteuert. Der Asynchronmotor 22 ist mit einem Digitaltacho 25 ausgestattet, der pro Motorumdrehung eine Vielzahl von Impulsen abgibt, beispielsweise 1024. Das Ausgangssignal des Digitaltachos 25 wird der Drehzahlregelung als Drehzahlistwert zugeführt. Die Walze 20 weist eine Synchronisiermarke 23 auf. Läuft diese während einer Drehung der Walze an einem Sensor 24 vorbei, dann liefert dieser der Drehzahl-/Winkelregelung 28 einen Synchronisierimpuls. Somit ist der Drehzahl-/Winkelregelung die absolute Stellung der Walze zum Sensor 24 bekannt. Weiterhin empfängt die Drehzahl-/Winkelregelung 28 auch einen Synchronisierimpuls vom Sensor 34 und die von einem Digitaltacho 35 generierten Impulse.

Auf der Walze 10 ist während des Prüfbetriebes das rechte Vorderrad des Kraftfahrzeugs positioniert. Die Walze 10 ist mit einem Asynchronmotor 12 unter Zwischenschaltung einer Getriebeübersetzung 17 verbunden. Dieser Asynchronmotor wird von einem Wechselrichter 16 mit integrierter Drehzahl-/Winkelregelung 18 angesteuert. Der Asynchronmotor 12 ist mit einem Digitaltacho 15 ausgestattet, der pro Motorumdrehung eine Vielzahl von Impulsen abgibt, beispielsweise 1024. Das Ausgangssignal des Digitaltachos 15 wird der Drehzahlregelung als Drehzahlistwert zugeführt. Die Walze 10 weist eine Synchronisiermarke 13 auf. Läuft diese während einer Drehung der Walze an einem Sensor 14 vorbei, dann liefert dieser der Drehzahl-/Winkelregelung 18 einen Synchronisierimpuls. Somit ist der Drehzahl-Winkelregelung die absolute Stellung der Walze zum Sensor 14 bekannt. Weiterhin empfängt die Drehzahl-/Winkelregelung 18 auch den Synchronisierimpuls vom Sensor 24 und die vom Digitaltacho 25 generierten Impulse.

Auf der Walze 40 ist während des Prüfbetriebes das rechte Hinterrad des Kraftfahrzeugs positioniert. Die Walze 40 ist mit einem Asynchronmotor 42 unter Zwischenschaltung einer Getriebeübersetzung 47 verbunden. Dieser Asynchronmotor wird von einem Wechselrichter 46 mit integrierter Drehzahl-/Winkelregelung 48 angesteuert. Der Asynchronmotor 42 ist mit einem Digitaltacho 45 versehen, der pro Motorumdrehung eine Vielzahl von Impulsen abgibt, beispielsweise 1024. Das Ausgangssignal des Digitaltachos 45 wird der Drehzahlregelung als Drehzahlistwert zugeführt. Die Walze 40 weist eine Synchronisiermarke 43 auf. Läuft diese während einer Drehung der Walze an einem Sensor 44 vorbei, dann liefert dieser der Drehzahl-/Winkelregelung 48 einen Synchronisierimpuls. Weiterhin empfängt die Drehzahl-/Winkelregelung 48 auch den Synchronisierimpuls vom Sensor 14 und die vom Digitaltacho 15 generierten Impulse.

Auf der Walze 30 ist während des Prüfbetriebes das linke Hinterrad des Kraftfahrzeugs positioniert. Die Walze 30 ist mit einem Asynchronmotor 32 unter Zwischenschaltung einer Getriebeübersetzung 37 verbunden. Dieser Asynchronmotor wird von einem Wechselrichter 36 mit integrierter Drehzahl-/Winkelregelung 38 angesteuert. Der Asynchronmotor 32 ist mit einem Digitaltacho 35 ausgestattet, der pro Motorumdrehung eine Vielzahl von Tachoimpulsen abgibt, beispielsweise 1024. Das Ausgangssignal des Digitaltachos 35 wird der Drehzahlregelung als Drehzahlistwert zugeführt. Die Walze 30 weist eine Synchronisiermarke 33 auf. Läuft diese während einer Drehung der Walze an einem Sensor 34 vorbei, dann liefert dieser der Drehzahl-/Winkelregelung 38 einen Synchronisierimpuls. Weiterhin empfängt die Drehzahl-/Winkelregelung 38 auch den Synchronisierimpuls vom Sensor 44 und die vom Digitaltacho 45 generierten Impulse.

Der in der FIG 1 dargestellte Kraftfahrzeugprüfstand erlaubt eine Prüfung von Front-, Heck- und Allradfahrzeugen. Im Betrieb des Prüfstandes wird jeweils einer der Walzen Masterfunktion und den anderen Walzen Slavefunktion zugeordnet. Für Fahrzeuge mit Frontantrieb ist beispielsweise der linken vorderen Walze 20 Masterfunktion zugeordnet. Für Fahrzeuge mit Heckantrieb ist beispielsweise der rechten hinteren Walze 40 Masterfunktion zugeordnet. Für Fahrzeuge mit Allradantrieb kann beispielsweise der linken vorderen Walze 20 oder der linken hinteren Walze 30 Masterfunktion zugeordnet sein.

Soll der gezeigte Kraftfahrzeugprüfstand in der Betriebsart 1 "Walze treibt Auto" zu einer Prüfung von Fahrzeugen mit Frontantrieb verwendet werden, dann ist - wie vorstehend bereits angegeben - der linken vorderen Walze 20 Masterfunktion zugeordnet. In dieser Betriebsart wird der Drehzahl-/Winkelregelung 28 von einer übergeordneten Steuerung 50 ein Drehzahlsollwert vorgegeben. Die Drehzahl-/Winkelregelung 28 beeinflusst den Wechselrichter 26 in Abhängigkeit vom Drehzahlsollwert derart, dass der Wechselrichter den Asynchronmotor 22 in Abhängigkeit vom Drehzahlsollwert und dem jeweils geforderten Motormoment geeignet ansteuert. Dieser wiederum treibt über die Getriebeübersetzung 27 die Walze 20 an, so dass sich diese mit einer vom Drehzahlsollwert abhängigen Drehzahl dreht.

In dieser Betriebsart, bei welcher der Walze 20 Masterfunktion zugeordnet ist, wird die in der Figur 1 gezeigte Ringstruktur der Regelung an der durch die gestrichelte Linie T1 bezeichneten Stelle aufgetrennt, da bezüglich des Masters lediglich eine Regelung auf die von der übergeordneten Steuerung 50 vorgegebene Solldrehzahl vorgenommen wird. Eine Fein- bzw. Winkelregelung in Abhängigkeit von den vom Digitaltacho 35 und dem Sensor 34 abgeleiteten Impulsen unterbleibt.

Soll der gezeigte Kraftfahrzeugprüfstand hingegen zu einer Prüfung von Fahrzeugen mit Heckantrieb verwendet werden, dann ist - wie bereits oben angegeben - der rechten hinteren Walze 40 Masterfunktion zugeordnet. In dieser Betriebsart wird der Drehzahl-/Winkelregelung 48 von der übergeordneten Steuerung 50 ein Drehzahlsollwert vorgegeben. Die Drehzahl-/Winkelregelung 48 beeinflusst den Wechselrichter 46 in Abhängigkeit vom Drehzahlsollwert derart, dass der Wechselrichter den Asynchronmotor 42 in Abhängigkeit vom Drehzahlsollwert ansteuert. Dieser wiederum treibt über die Getriebeübersetzung 47 die Walze 40 an, so dass sich diese mit einer vom Drehzahlsollwert abhängigen Drehzahl dreht.

In dieser Betriebsart, bei welcher der Walze 40 Masterfunktion zugeordnet ist, wird die in der Figur 1 gezeigte Ringstruktur der Regelung an der durch die gestrichelte Linie T2 bezeichneten Stelle aufgetrennt, da bezüglich des Masters lediglich eine Regelung auf die von der übergeordneten Steuerung 50 vorgegebene Solldrehzahl vorgenommen wird. Eine Fein- bzw. Winkelregelung in Abhängigkeit von den vom Digitaltacho 15 und dem Sensor 14 abgeleiteten Impulsen unterbleibt.

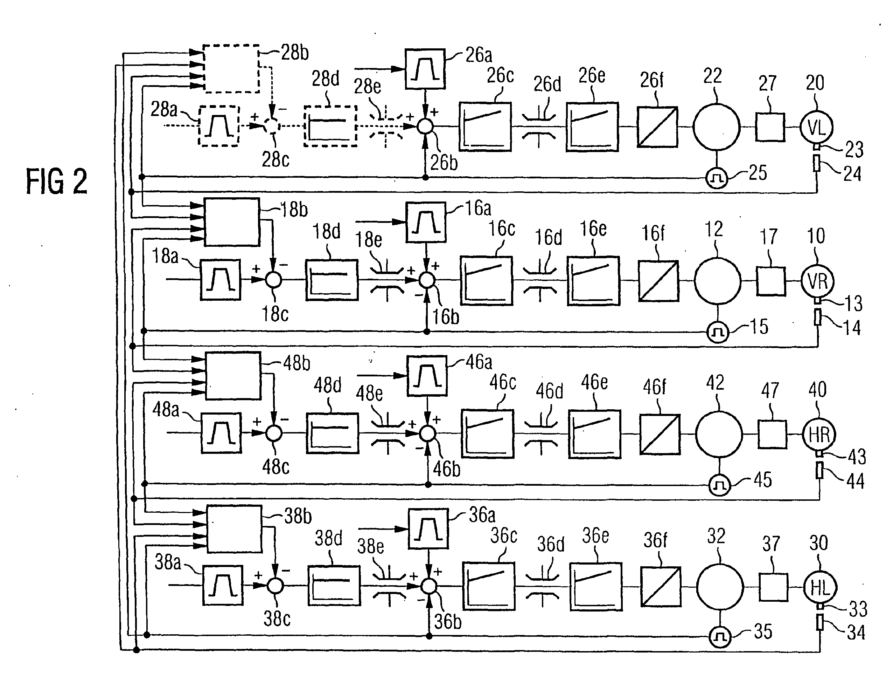

Die FIG 2 zeigt ein detaillierteres Strukturbild der Regelung bei einer Betriebsart, bei welcher Fahrzeuge mit Frontantrieb geprüft werden und bei welcher das zu prüfende Fahrzeug im ungebremsten Zustand und ausgekuppelt auf den Walzen 10, 20, 30, 40 positioniert ist, d.h. in der Betriebsart 1 "Walze treibt Auto". Bei dieser Betriebsart ist der vorderen linken Walze 20 Masterfunktion zugeordnet. Die weiteren Walzen 10, 30 und 40 werden der Walze 20 im Sinne einer elektronischen Gleichlaufregelung nachgeführt.

Aus der FIG 2 ist ersichtlich, dass jeder Walze 10, 20, 30, 40 ein eigener Regelkreis mit Asynchronmotor 12, 22, 32, 42 zugeordnet ist, der über eine Getriebeübersetzung 17, 27, 37, 47 die jeweilige Walze antreibt.

Der der Walze 20 zugeordnete Regelkreis weist einen Hochlaufgeber 28a, eine Drehzahl-/Lageistwerterfassung 28b, einen Addierer 28c, einen Weg-/Winkelregler 28d und einen Begrenzer 28e auf. Weiterhin gehören dem der Walze 20 zugeordneten Regelkreis ein Hochlaufgeber 26a, ein Addierer 26b, ein Drehzahlregler 26c, ein Begrenzer 26d, ein Stromregler 26e und ein Steuersatz 26f an.

Der der Walze 10 zugeordnete Regelkreis weist einen Hochlaufgeber 18a, eine Drehzahl-/Lageistwerterfassung 18b, einen Addierer 18c, einen Weg-/Winkelregler 18d und einen Begrenzer 18e auf. Weiterhin gehören dem der Walze 10 zugeordneten Regelkreis ein Hochlaufgeber 16a, ein Addierer 16b, ein Drehzahlregler 16c, ein Begrenzer 16d, ein Stromregler 16e und ein Steuersatz 16f an.

Der der Walze 40 zugeordnete Regelkreis weist einen Hochlaufgeber 48a, eine Drehzahl-/Lageistwerterfassung 48b, einen Addierer 48c, einen Weg-/Winkelregler 48d und einen Begrenzer 48e auf. Weiterhin gehören dem der Walze 40 zugeordneten Regelkreis ein Hochlaufgeber 46a, ein Addierer 46b, ein Drehzahlregler 46c, ein Begrenzer 46d, ein Stromregler 46e und ein Steuersatz 46f an.

Der der Walze 30 zugeordnete Regelkreis weist einen Hochlaufgeber 38a, eine Drehzahl-/Lageistwerterfassung 38b, einen Addierer 38c, einen Weg-/Winkelregler 38d und einen Begrenzer 38e auf. Weiterhin gehören dem der Walze 30 zugeordneten Regelkreis ein Hochlaufgeber 36a, ein Addierer 36b, ein Drehzahlregler 36c, ein Begrenzer 36d, ein Stromregler 36e und ein Steuersatz 36f an.

Die Elemente 28a, 28b, 28c, 28d und 28e des der Walze 20 zugeordneten Regelkreises sind in der Figur 2 gestrichelt gezeichnet, da sie in der vorliegenden Betriebsart außer Betrieb sind, wie es in Figur 1 durch die gestrichelte Linie T1 angedeutet ist.

Dem Eingang des Hochlaufgebers 26a wird von einer übergeordneten Steuerung, beispielsweise über ein Bedienpanel, ein Drehzahlsollwert zugeführt. Dieser Hochlaufgeber hat eine Rampenfunktion, so dass der Drehzahlsollwert der folgenden Schaltung gemäß einer Rampe zugeführt wird. Dies bewirkt, dass der volle Drehzahlsollwert erst nach Ablauf eines vorgegebenen Zeitintervalles anliegt.

Das Ausgangssignal des Hochlaufgebers wird dem Addierer 26b zugeführt, welchem mit negativem Vorzeichen der Drehzahlistwert vom Asynchronmotor 22, abgeleitet aus den Tachoimpulsen vom Digitaltacho 25 zugeleitet wird. Das Ausgangssignal des Addierers 26b gelangt an den Drehzahlregler 26c. Sein Ausgangssignal wird über den Begrenzer 26d dem Stromregler 26c zugeführt, dessen Ausgang wiederum mit dem Steuersatz 26f verbunden ist. Der Steuersatz setzt das Signal in elektrische Impulse um, mittels derer die Halbleiterventile des Wechselrichters geeignet angesteuert werden. Der Asynchronmotor 22 treibt über die Getriebeübersetzung 27 die vordere linke Walze 20 an. Die sich am Asynchronmotor einstellende Motorspannung bzw. der sich einstellende Motorstrom entspricht dann der gewünschten Motordrehzahl und dem gewünschten Motordrehmoment.

Dem Eingang des Hochlaufgebers 16a des der Walze 10 zugeordneten Regelkreises wird über die übergeordnete Steuerung 50 als grober Drehzahlsollwert der vom Asynchronmotor 22 abgeleitete Istdrehzahlwert des Masters zugeführt. Dieser gelangt über den Hochlaufgeber 16a an den Addierer 16b. Diesem wird weiterhin ein Drehzahlkorrekturwert und mit negativem Vorzeichen der vom Digitaltacho 15 abgeleitete Drehzahlistwert zugeführt.

Der Drehzahlkorrekturwert, der dem Addierer 16b zugeführt wird, wird unter Verwendung eines Versatzsollwertes, der vom Digitaltacho 25 des Masters, der vom Digitaltacho 15, der vom Sensor 24 des Masters und der vom Sensor 14 der Walze 10 abgeleiteten Impulse ermittelt. Der Versatzsollwert wird von der übergeordneten Steuerung 50 vorgegeben und dem Addierer 18c über den Hochlaufgeber 18a zugeführt. Aus den von den Digitaltachos 25 und 15 und den von den Sensoren 24 und 14 abgeleiteten Impulsen wird in der Drehzahl-/Lageistwerterfassung 18b ein Lagedifferenzsignal ermittelt und mit negativem Vorzeichen dem Addierer 18c zugeleitet.

Das Ausgangssignal des Addierers 18c wird dem Weg-/Winkelregler 18d zugeführt. Dessen Ausgangssignal gelangt über den Begrenzer 18e an den Addierer 16b und beeinflusst die nachfolgende Drehzahlregelung im Sinne einer Feinkorrektur.

Das Ausgangssignal des Addierers 16b gelangt an den Drehzahlregler 16c. Dessen Ausgangssignal wird über den Begrenzer 16d dem Stromregler 16e zugeführt. In dem sich dem Stromregler anschließenden Steuersatz wird das Signal in elektrische Impulse umgesetzt, mittels derer der Asynchronmotor 12 über Halbleiterventile (IGBTs) angesteuert wird. Der Asynchronmotor 12 treibt über die Getriebeübersetzung 17 die vordere rechte Walze 10 an.

Dem Eingang des Hochlaufgebers 46a des der Walze 40 zugeordneten Regelkreises wird über die übergeordnete Steuerung 50 als grober Drehzahlsollwert der vom Asynchronmotor 22 abgeleitete Istdrehzahlwert des Masters zugeführt. Dieser gelangt über den Hochlaufgeber 46a an den Addierer 46b. Diesem wird weiterhin ein Drehzahlkorrekturwert und mit negativem Vorzeichen der vom Impulsgeber 45 abgeleitete Drehzahlistwert zugeführt.

Der Drehzahlkorrekturwert, der dem Addierer 46b zugeführt wird, wird unter Verwendung eines Versatzsollwertes, der vom Digitaltacho 15 des Asynchronmotors 12, der vom Digitaltacho 45, der vom Sensor 14 der Walze 10 und der vom Sensor 44 der Walze 40 abgeleiteten Impulse ermittelt. Der Versatzsollwert wird von der übergeordneten Steuerung 50 vorgegeben und dem Addierer 48c über den Hochlaufgeber 48a zugeführt. Aus den von den Digitaltachos 15 und 45 und den von den Sensoren 14 und 44 abgeleiteten Impulsen wird in der Drehzahl-/Lageistwerterfassung 48b ein Lagedifferenzsignal ermittelt und mit negativem Vorzeichen dem Addierer 48 c zugeleitet.

Das Ausgangssignal des Addierers 48c wird dem Weg-/Winkelregler 48d zugeführt. Dessen Ausgangssignal gelangt über den Begrenzer 48e an den Addierer 46b und beeinflusst die nachfolgende Drehzahlregelung im Sinne einer Feinkorrektur.

Das Ausgangssignal des Addierers 46b gelangt an den Drehzahlregler 46c. Dessen Ausgangssignal wird über den Begrenzer 46d dem Stromregler 46e zugeführt. In dem sich dem Stromregler anschließenden Steuersatz wird das Signal in elektrische Impulse umgesetzt, mittels derer der Asynchronmotor 42 über Halbleiterventile (IGBTs) angesteuert wird. Der Asynchronmotor 42 treibt über die Getriebeübersetzung 47 die hintere rechte Walze 40 an.

Dem Eingang des Hochlaufgebers 36a des der Walze 30 zugeordneten Regelkreises wird über die übergeordnete Steuerung 50 als grober Drehzahlsollwert der vom Asynchronmotor 22 abgeleitete Istdrehzahlwert des Motors zugeführt. Dieser gelangt über den Hochlaufgeber 36a an den Addierer 36b. Diesem wird weiterhin ein Drehzahlkorrekturwert und mit negativem Vorzeichen der vom Impulsgeber 35 abgeleitete Drehzahlistwert zugeführt.

Der Drehzahlkorrekturwert, der dem Addierer 36b zugeführt wird, wird unter Verwendung eines Versatzsollwertes, der vom Digitaltacho 45 des Asynchronmotors 42, der vom Digitaltacho 35, der vom Sensor 44 der Walze 40 und der vom Sensor 34 der Walze 30 abgeleiteten Impulse ermittelt. Der Versatzsollwert wird von der übergeordneten Steuerung 50 vorgegeben und dem Addierer 38c über den Hochlaufgeber 38a zugeführt. Aus den von den Digitaltachos 45 und 35 und den von den Sensoren 44 und 34 abgeleiteten Impulsen wird in der Drehzahl-/Lageistwerterfassung 38b ein Lagedifferenzsignal ermittelt und mit negativem Vorzeichen dem Addierer 38c zugeleitet.

Das Ausgangssignal des Addierers 38c wird dem Weg-/Winkelregler 38d zugeführt. Dessen Ausgangssignal gelangt über den Begrenzer 38e an den Addierer 36b und beeinflusst die nachfolgende Drehzahlregelung im Sinne einer Feinkorrektur.

Das Ausgangssignal des Addierers 36b gelangt an den Drehzahlregler 36c. Dessen Ausgangssignal wird über den Begrenzer 36d dem Stromregler 36e zugeführt. In dem sich dem Stromregler anschließenden Steuersatz wird das Signal in elektrische Impulse umgesetzt, mittels derer der Asynchronmotor 32 über Halbleiterventile (IGBTs) angesteuert wird. Der Asynchronmotor 32 treibt über die Getriebeübersetzung 37 die hintere linke Walze 30 an.

Mittels der in der Figur 2 gezeigten Regelstruktur werden die Slavefunktion aufweisenden Walzen 10, 30 und 40 im Winkelgleichlauf zur Walze 20 betrieben, welcher Masterfunktion zugeordnet ist. Dem Regelkreis der Walze 20 wird von einer übergeordneten Steuerung ein Drehzahlsollwert vorgegeben. Der Drehzahlistwert des der Walze 20 zugeordneten Asynchronmotors 22 wird erfasst und als grober Drehzahlsollwert über die übergeordnete Steuerung 50 den den Walzen 10, 30 und 40 zugeordneten Drehzahl-/Winkelreglern zugeführt.

Eine Auftrennung der Ringstruktur der Regelung wird beim gezeigten Ausführungsbeispiel durch ein Außerbetriebsetzen des Weg-/Winkelreglers 28d erreicht, was in der Figur 2 durch die gestrichelten Linien angedeutet ist. Dieses Außerbetriebsetzen kann beispielsweise durch ein Sperren des Winkelreglers erfolgen.

Mittels der Begrenzer 16d, 26d, 36d und 46d kann das Ausgangssignal des jeweiligen Drehzahlreglers 16c, 26c, 36c und 46c begrenzt werden, um eine Überlastung des jeweiligen Asynchronmotors 12, 22, 32, 42 zu verhindern.

Mittels der Begrenzer 18e, 38e und 48e kann der am Ausgang des jeweiligen Weg-/Winkelreglers 18d, 38d und 48d vorliegende Zusatzsollwert auf einen vorgegebenen Maximalwert begrenzt werden. Die Geschwindigkeit der Versatzwinkelverstellung wird dadurch einstellbar.

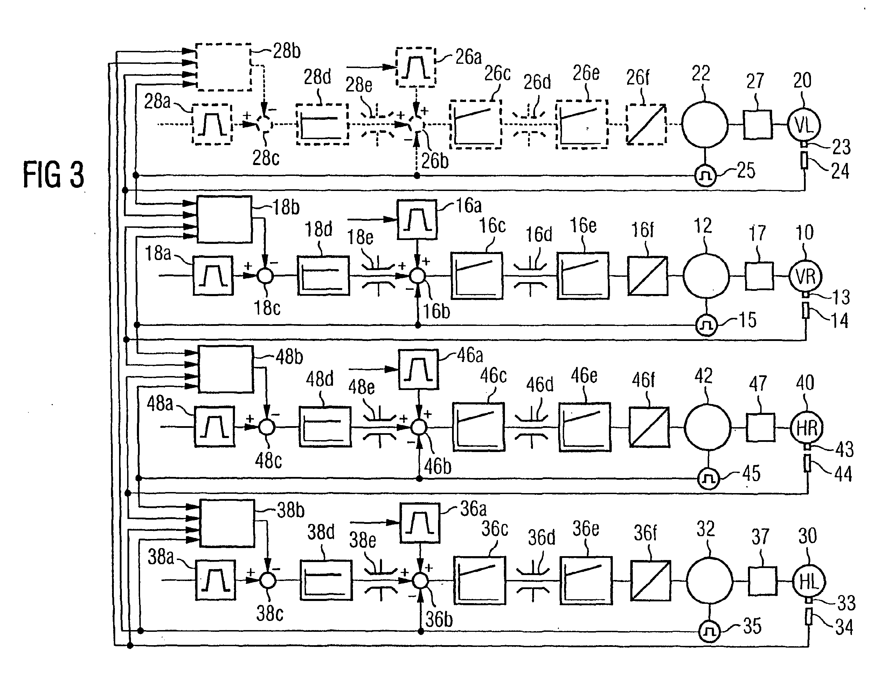

Die FIG 3 zeigt ein detaillierteres Strukturbild der Regelung in Betriebsart 2 "Auto treibt Walze" für Fahrzeuge mit Frontantrieb. Demnach ist auch in Figur 3 der vorderen linken Walze 20 Masterfunktion zugeordnet. Die weiteren Walzen 10, 30 und 40 werden der Walze 20 im Sinne einer elektronischen Gleichlaufregelung nachgeführt.

Das in der FIG 3 gezeigte Strukturbild unterscheidet sich von dem in der FIG 2 gezeigten Strukturbild dadurch, dass bei der FIG 3 dem die Bauteile 26a, 26b, 26c, 26d, 26e und 26f aufweisenden Drehzahlregelkreis der Drehzahlsollwert Null vorgegeben wird und keinerlei Motordrehmoment zugelassen wird (Drehmomentbegrenzung gleich Null). In der FIG 3 ist dies durch die gestrichelten-Linien angedeutet.

Die Solldrehzahl wird bei dieser Betriebsart vom Fahrer des Testfahrzeugs durch eine entsprechende Betätigung des Gaspedals vorgegeben. Die entsprechende Istdrehzahl der Walze 20 bzw. des dieser zugeordneten Motors 22 wird erfasst und dem der Walze 10 zugeordneten Regelkreis als Drehzahlsollwert zugeführt. Ansonsten erfolgt die Gleichlaufregelung ebenso wie es oben anhand von Figur 2 beschrieben wurde.

Wird bei den vorstehend beschriebenen Regelvorgängen zusätzlich zum Winkelgleichlauf (Gleichlauf aller vier Räder) auch ein Synchronisieren (Reproduzierbarkeit des Fahrbahnbelages) und eine Versatzwinkeleinstellung (Änderung des Fahrbahnbelags) gefordert, so müssen auch die vom jeweiligen Sensor 14, 24, 34, 44 abgeleiteten Synchronisierimpulse bzw. Nullimpulse ausgewertet werden, die eine bestimmte Lage an der Walze kennzeichnen. Bei diesem Synchronisiervorgang werden die Synchronimpulse vom jeweiligen Master und dem jeweiligen Slave in eine bestimmte Lage zueinander gebracht. Der Winkelversatz zwischen den beiden Synchronisiermarken ist dabei durch die Anzahl der einlaufenden Tachoimpulse des jeweiligen Slaveantriebs zwischen den beiden Synchronisiermarken charakterisiert.

Werden in der gleichen Betriebsart 2 Fahrzeuge mit Heckantrieb geprüft, ist der hinteren rechten Walze 40 Masterfunktion zugeordnet. Zur Realisierung dieser Betriebsart erfolgt eine entsprechende Auftrennung des Regelkreises durch eine nicht erfolgte Winkelreglerfreigabe an 48d. Dem Drehzahlregler 46c wird der Drehzahlsollwert Null vorgegeben. Die Drehmomentenbegrenzung 46d wird auf Null gesetzt.

Werden in Betriebsart 2 "Auto treibt Walze" Drehmomentbegrenzungen ungleich 0 vorgegeben, so können bei Betrieb des Fahrzeugs aufgrund des übersteuerten Drehzahlreglers (Drehzahlsollwert gleich Null, Drehzahlistwert ungleich Null) gezielt Drehmomente auf den Motor und über die Getriebeübersetzung auf die Walze gegeben werden, die je nach Momentenrichtung ein Berg- bzw. Talfahrt simulieren.

Ein Fahrzeugprüfstand gemäß der Erfindung ist nach alledem in einer Vielzahl verschiedener Betriebsarten betreibbar, wobei ein Übergang zwischen den möglichen Betriebsarten schnell und einfach durch eine elektronische Vorgabe von Parametern erfolgen kann.

## Patentansprüche

1. Verfahren zur Gleichlaufregelung bei einem Kraftfahrzeugprüfstand, welcher vier Walzen und vier Asynchronmotoren aufweist, wobei jeder der Asynchronmotoren zum Antrieb einer der Walzen dient, und wobei jeder Walze eine Regeleinheit zugeordnet ist, und wobei die Gleichlaufregelung elektronisch gemäß einer Ringstruktur erfolgt,
**dadurch gekennzeichnet, daß**
- zumindest ein Asynchronmotor von einem Wechselrichter mit integrierter Drehzahl-/Winkelregelung angesteuert wird, wobei der Asynchronmotor mit einem Digitaltacho ausgestattet ist, der pro Motorumdrehung eine Vielzahl von Impulsen abgibt,
- ein Ausgangssignal des Digitaltachos der Drehzahl-/Winkelregelung als Drehzahlistwert zugeführt wird,
- eine mit dem Asynchronmotor verbundene Walze eine Synchronisiermarke aufweist, wobei ein Sensor der Drehzahl-/Winkelregelung einen Synchronisierimpuls liefert, wenn die Synchronisierungsmarke während einer Drehung der Walze am Sensor vorbeiläuft, und wobei der Drehzahl-/Winkelregelung mit dem Synchronisierimpuls die absolute Stellung der Walze zum Sensor bekannt ist,
- die Drehzahl-/Winkelregelung auch einen Synchronisierimpuls von einem Sensor einer weiteren Walze und von einem Digitaltacho eines mit der weiteren Walze verbundenen Asynchronmotors generierte Impulse empfängt.

2. Verfahren nach einem der vorhergehenden Ansprüche,
**dadurch gekennzeichnet,**
**daß** zur Simulation einer Berg- oder Talfahrt eine Drehmomentenvorgabe erfolgt.

3. Verfahren nach einem der vorhergehenden Ansprüche,
**dadurch gekennzeichnet,**
**daß** die Walzen relativ zueinander verdreht werden können und die Gleichlaufregelung im Sinne einer Aufrechterhaltung der relativen Verdrehung erfolgt.

4. Verfahren nach einem der vorhergehenden Ansprüche,
**dadurch gekennzeichnet, daß**
- einer ersten der vier Walzen Masterfunktion zugeordnet wird,
- der Drehzahl-/Winkelregelung der die Masterfunktion ausübenden Walze ein Drehzahlsollwert vorgegeben wird,
- der Drehzahlistwert der die Masterfunktion ausübenden Walze erfaßt wird,
- der erfaßte Drehzahlistwert der die Masterfunktion ausübende Walze der Drehzahl-/Winkelregelung einer zweiten der vier Walzen als Drehzahlsollwert vorgegeben wird,
- der Drehzahlistwert der zweiten Walze erfaßt wird, und
- die Drehzahl der zweiten Walze so geregelt wird, daß der Drehzahlistwert mit dem Drehzahlsollwert übereinstimmt.

5. Verfahren nach Anspruch 4,
**dadurch gekennzeichnet,**
**daß** der Drehzahlsollwert der die Masterfunktion ausübenden Walze von einer übergeordneten Steuerung oder über eine Betätigung des Gaspedals des Fahrzeugs vorgegeben wird.

6. Verfahren nach Anspruch 4 oder 5,
**dadurch gekennzeichnet, daß**
- der Drehzahlistwert der die Masterfunktion ausübenden Walze der Drehzahl-/Winkelregelung einer dritten der vier Walzen als Drehzahlsollwert vorgegeben wird,
- der Drehzahlistwert der dritten Walze erfaßt wird, und
- die Drehzahl der dritten Walze so geregelt wird, daß der Drehzahlistwert mit dem Drehzahlsollwert übereinstimmt.

7. Verfahren nach Anspruch 6,
**dadurch gekennzeichnet, daß**
- der Drehzahlistwert der die Masterfunktion ausübenden Walze der Drehzahl-/Winkelregelung der vierten Walze als Drehzahlsollwert vorgegeben wird,
- der Drehzahlistwert der vierten Walze erfaßt wird, und
- die Drehzahl der vierten Walze so geregelt wird, daß der Drehzahlistwert mit dem Drehzahlsollwert übereinstimmt.

8. Verfahren nach einem der vorhergehenden Ansprüche,
**dadurch gekennzeichnet,**
**daß** von jeder der Walzen ein Synchronisierimpuls pro Umdrehung abgeleitet wird und dieser beim Regelvorgang berücksichtigt wird.

9. Verfahren nach Anspruch 8,
**dadurch gekennzeichnet,**
**daß** der Drehzahl-/Winkelregelung einer Walze ein von der in der Ringstruktur vorhergehenden Walze abgeleiteter Synchronisierimpuls und ein von der der Regeleinheit zugehörigen Walze abgeleiteter Synchronisierimpuls zugeführt wird, die Anzahl der zwischen diesen beiden Synchronisierimpulsen auftretenden Impulse eines Tachos gezählt werden und der erhaltene Zählwert zur Einstellung eines gewünschten Versatzes zwischen beiden Walzen verwendet wird.

## Claims

1. Method for synchronization control of a motor vehicle testing stand which has four rollers and four asynchronous motors, wherein each of the asynchronous motors serves to drive one of the rollers, and wherein each roller is assigned a regulating unit, and wherein the synchronization control is carried out electronically in accordance with an annular structure,
**characterized in that**
- at least one asynchronous motor is actuated by an inverter with integrated rotational speed/angle controller, wherein the asynchronous motor is equipped with a digital speedometer which outputs a plurality of pulses per revolution of the motor,
- an output signal of the digital speedometer is fed to the rotational speed/angle controller as an actual value for the rotational speed,
- a roller which is connected to the asynchronous motor has a synchronization mark, wherein a sensor of the rotational speed/angle controller supplies a synchronization pulse when the synchronization mark passes the sensor during a revolution of the roller, and wherein the absolute position of the roller with respect to the sensor is known to the rotational speed/angle controller with the synchronization pulse, and
- the rotational speed/angle controller also receives a synchronization pulse from a sensor of a further roller and pulses generated by a digital speedometer of an asynchronous motor which is connected to the further roller.

2. Method according to one of the preceding claims,
**characterized**
**in that** a torque value was predefined for the simulation of uphill travel or downhill travel.

3. Method according to one of the preceding claims,
**characterized**
**in that** the rollers can be rotated in relation to one another and the synchronization control takes place with the aim of maintaining the relative rotation.

4. Method according to one of the preceding claims,
**characterized in that**
- a first of the four rollers is assigned a master function,
- a setpoint value of the rotational speed is predefined to the rotational speed/angle controller of the roller which carries out the master function,
- the actual value of the rotational speed of the roller which carries out the master function is detected,
- the detected actual value of the rotational speed of the roller which carries out the master function is predefined to the rotational speed/angle controller of a second of the four rollers as a setpoint value of the rotational speed,
- the actual value of the rotational speed of the second roller is detected, and
- the rotational speed of the second roller is controlled in such a way that the actual value of the rotational speed corresponds to the setpoint value of the rotational speed.

5. Method according to Claim 4,
**characterized**
**in that** the setpoint value of the rotational speed of the roller which carries out the master function is predefined by a superordinate control system or by the driver activating the accelerator pedal.

6. Method according to Claim 4 or 5,
**characterized in that**
- the actual value of the rotational speed of the roller which carries out the master function is predefined to the rotational speed/angle controller of a third of the four rollers as a setpoint value of the rotational speed,
- the actual value of the rotational speed of the third roller is detected, and
- the rotational speed of the third roller is controlled in such a way that the actual value of the rotational speed corresponds to the setpoint value of the rotational speed.

7. Method according to Claim 6,
**characterized in that**
- the actual value of the rotational speed of the roller which carries out the master function is predefined to the rotational speed/angle controller of the fourth roller as a setpoint value of the rotational speed,
- the actual value of the rotational speed of the fourth roller is detected, and
- the rotational speed of the fourth roller is controlled in such a way that the actual value of the rotational speed corresponds to the setpoint value of the rotational speed.

8. Method according to one of the preceding claims,
**characterized**
**in that** each of the rollers derives one synchronization pulse per revolution and takes said pulse into account in the control process.

9. Method according to Claim 8,
**characterized**
**in that** the rotational speed/angle controller of a roller is supplied with a synchronization pulse which is derived from the preceding roller in the annular structure and with a synchronization pulse which is derived from the roller which is associated with the control unit, the number of pulses of a speedometer occurring between these two synchronization pulses is counted, and the counted value which is obtained is used to set a desired offset between the two rollers.

## Revendications

1. Procédé de régulation du synchronisme dans un banc d'essai de véhicule automobile, qui a quatre rouleaux et quatre moteurs asynchrones, dans lequel chacun des moteurs asynchrones sert à l'entraînement de l'un des rouleaux et dans lequel à chaque rouleau est associé une unité de régulation et dans lequel la régulation du synchronisme s'effectue électroniquement suivant une structure en anneau,
**caractérisé en ce que**
- au moins un moteur asynchrone est commandé par un onduleur ayant une régulation intégrée de vitesse de rotation/angle, le moteur asynchrone étant équipé d'un tachymètre numérique qui émet une pluralité d'impulsions par tour du moteur,
- un signal de sortie du tachymètre numérique est envoyé comme valeur réelle de la vitesse de rotation à la régulation de la vitesse de rotation/angle,
- un rouleau relié au moteur asynchrone a un repère de synchronisation, un capteur de la régulation de la vitesse de rotation/angle fournissant une impulsion de synchronisation lorsque le repère de synchronisation passe devant le capteur pendant une rotation du rouleau et la position absolue du rouleau par rapport au capteur étant connue à partir de la régulation de la vitesse de rotation/angle par l'impulsion de synchronisation,
- la régulation de la vitesse de rotation/angle reçoit aussi une impulsion de synchronisation d'un capteur d'un autre rouleau et des impulsions produites par un tachymètre numérique d'un moteur asynchrone relié à l'autre rouleau.

2. Procédé suivant l'une des revendications précédentes,
**caractérisé en ce que** l'on effectue une prescription de couple de rotation pour la simulation d'un trajet en montée et en descente.

3. Procédé suivant l'une des revendications précédentes,
**caractérisé en ce que** l'on peut faire tourner les rouleaux l'un par rapport à l'autre et effectuer la régulation de synchronisation en vue du maintien de la rotation relative.

4. Procédé suivant l'une des revendications précédentes,
**caractérisé en ce que**
- une fonction maître est associée à un premier des quatre rouleaux,
- une valeur de consigne de vitesse de rotation est prescrite à la régulation de la vitesse de rotation/angle du rouleau exerçant la fonction maître,
- la valeur réelle de la vitesse de rotation du rouleau exerçant la fonction maître est détectée,
- la valeur réelle détectée de la vitesse de rotation du rouleau exerçant la fonction maître est prescrite à la régulation de la vitesse de la rotation/angle d'un deuxième des quatre rouleaux en tant que valeur de consigne de la vitesse de rotation,
- la valeur réelle de la vitesse de rotation du deuxième rouleau est détectée, et
- la vitesse de rotation du deuxième rouleau est régulée de manière à ce que la valeur réelle de la vitesse de rotation coïncide avec la valeur de consigne de la vitesse de rotation.

5. Procédé suivant la revendication 4,
**caractérisé en ce que**
la valeur de consigne de la vitesse de rotation du rouleau exerçant la fonction maître est prescrite par une commande supérieure hiérarchiquement ou par un actionnement de la pédale des gaz du véhicule.

6. Procédé suivant la revendication 4 ou 5,
**caractérisé en ce que**
- la valeur réelle de la vitesse de rotation du rouleau exerçant la fonction maître est prescrite à la régulation de la vitesse de rotation/angle d'un troisième des quatre rouleaux en tant que valeur de consigne de la vitesse de rotation,
- la valeur réelle de la vitesse de rotation du troisième rouleau est détectée, et
- la vitesse de rotation du troisième rouleau est régulée de manière à ce que la vitesse réelle de la vitesse de rotation coïncide avec la valeur de consigne de la vitesse de rotation.

7. Procédé suivant la revendication 6,
**caractérisé en ce que**
- la valeur réelle de la vitesse de rotation du rouleau exerçant la fonction maître est prescrite à la régulation de la vitesse de rotation/angle du quatrième rouleau en tant que valeur de consigne de la vitesse de rotation,
- la valeur réelle de la vitesse de rotation du quatrième rouleau est détectée, et
- la vitesse de rotation du quatrième rouleau est régulée de manière à ce que la valeur réelle de la vitesse de rotation coïncide avec la valeur de consigne de la vitesse de rotation.

8. Procédé suivant l'une des revendications précédentes,
**caractérisé en ce qu'**il est dérivé de chacun des rouleaux une impulsion de synchronisation par tour et il en est tenu compte dans l'opération de régulation.

9. Procédé suivant la revendication 8,
**caractérisé en ce que**
il est envoyé, à la régulation de la vitesse de rotation/angle d'un rouleau, une impulsion de synchronisation dérivée du rouleau précédent dans la structure en anneau et une impulsion de synchronisation dérivée du rouleau associé à l'unité de régulation, le nombre des impulsions d'un tachymètre se produisant entre ces deux impulsions de synchronisation étant compté et le décompte obtenu étant utilisé pour établir un écart souhaité entre les deux rouleaux.
